# EUROPÄISCHE PATENTSCHRIFT

(11) **EP 2 339 087 B1**
(45) Veröffentlichungstag und Bekanntmachung des Hinweises auf die Patenterteilung: **13.03.2013**
(21) Anmeldenummer: 10188786.7
(22) Anmeldetag: 26.10.2010
(51) Int. Cl.: E04D 13/10, F16B 2/06

(54) **Klemmlasche z. B. für ein Schneefangsystem auf Metalldächern**
Clamping strap e. g. for a snow guard system on a metal roof
Éclisse de serrage par exemple pour un système de retenue de neige sur une toiture métallique

(30) Priorität: 22.12.2009 DE 102009055211
(43) Veröffentlichungstag der Anmeldung: 29.06.2011
(73) Patentinhaber: Treiber, Rudolf, Dipl.-Ing., D-71634 Ludwigsburg (DE)
(72) Erfinder: Treiber, Rudolf, 71634 Ludwigsburg (DE)
(74) Vertreter: Dreiss

(56) Entgegenhaltungen:
- EP-A1- 1 428 955
- US-A1- 2003 066 247
- US-A1- 2004 055 233
- US-A1- 2005 102 958
- US-A1- 2006 075 691
- US-A1- 2008 302 928

## Beschreibung

### Beschreibung

Die Erfindung betrifft eine Klemmlasche, z.B. für ein Schneefangsystem oder eine Halterung für Dachaufbauten auf Metalldächern, mit zwei beiderseits durch wenigstens ein Spannelement gegen einen Stehfalz des Metalldaches gedrückten, als Klemmteil dienenden Klemmbacken, wobei als Klemmteil ein einteiliges, U-förmig ausgebildetes Strangpressprofil vorgesehen ist, dessen Schenkel als Klemmbacken ausgebildet sind, und die Schenkel zwei zueinander fluchtende Durchbrüche aufweisen, wobei die Durchbrüche vom Spannelement durchgriffen sind und das Spannelement einen den Durchbruch randseitig übergreifenden Kopf aufweist.

Aus der EP 0 594 948 A1 ist eine derartige Klemmlasche mit zwei einander gegenüber liegenden Klemmbacken bekannt, die sich auch für Schneefangsysteme bewährt hat. Als Halterung für schwere Dachaufbauten ist diese Klemmlasche jedoch nur bedingt geeignet, da nicht gewährleistet ist, dass die Klemmung bei allen Temperaturen die erforderliche Klemmkraft aufbringt. Bei großen Temperaturunterschieden können sich die Abmessungen der Klemmlasche und des geklemmten Falzes so stark ändern, dass die Klemmung unzureichend wird.

Der Erfindung liegt daher die Aufgabe zugrunde, eine Klemmlasche insbesondere für schwere Dachaufbauten auf Metalldächern zu schaffen, deren Halterung und Klemmung auf dem Stehfalz sicherer ist.

Diese Aufgabe wird mit einer Klemmlasche der eingangs genannten Art dadurch gelöst, dass zwischen dem Durchbruch und dem Rand oder Umfang des Kopfes ein zweiter Durchbruch vorgesehen ist, in welchen ein Stift eingesetzt ist, dessen Länge größer ist, als die Dicke des den zweiten Durchbruch aufweisenden Schenkels.

Die Klemmlasche mit ihrem U-förmig geformten, einteiligen Strangpressprofil kann einfach über den Metallfalz des in Stehfalztechnik hergestellten Metalldaches gestülpt werden und dient als einziges Grundteil für weitere Dachaufbauten. Darüber hinaus kann die Klemmlasche als Strangpressprofil in größeren Längen hergestellt und durch einfaches Absägen in die geeigneten Längen verkürzt werden. Durch die Anordnung der als Strangpressprofil gebildeten Klemmlasche auf einem als Stehfalz ausgebildeten Falz eines in Klempner-Technik ausgeführten Metalldaches kann infolge der hohen Steifigkeit des Strangpressprofils eine hohe Klemmkraft und dadurch eine sichere Halterung der jeweiligen Dachaufbauten erreicht werden.

Infolge der Ausbildung als Strangpressprofil ergeben sich für derartige Klemmlaschen darüber hinaus mehrere vorteilhafte Anwendungen. Zum Beispiel kann die erfindungsgemäße Klemmlasche als Halterung und Träger für Dachaufbauten, z.B. für Solar- oder Fotovoltaik-Anlagen dienen. Um auch sehr große Lasten mit Sicherheit abstützen zu können wird die Klemmlasche nicht nur mit dem Stehfalz des Metalldaches verklemmt, sondern die Klemmlasche wird mit dem Stehfalz auch formschlüssig verbunden. Hierfür wird beim Festspannen der Klemmlasche zusätzlich ein Stift in den Stehfalz des Metalldaches eingedrückt. Der im Stehfalz verankerte Stift verhindert mit Sicherheit ein Verschieben der Klemmlasche. Die Gefahr eines Verschiebens ist bei aus einem Strangpressprofil hergestellten Klemmlaschen in Längsrichtung des Stehfalzes immer vorhanden, da die Profilierung der Anlagebereiche der beiden Schenkel am Stehfalz immer in Richtung des Stehfalzes verläuft, also nur eine Längsprofilierung sein kann. Der den Stehfalz verformende Stift sichert die Klemmlasche nunmehr gegen Verschieben sowohl in Längsrichtung des Stehfalzes als auch in Richtung der Normale des Daches. Da der Stift eine Länge aufweist, die größer ist als die Dicke des den Stift tragenden Schenkels, wird der Stift auf jeden Fall von der Spannvorrichtung in Richtung des Stehfalzes verschoben und dringt in diesen ein oder verformt diesen zumindest.

Bei einem bevorzugten Ausführungsbeispiel ist das Spannelement eine Schraube oder ein Niet. Der über den Schaft überstehende Rand des Schrauben- oder Nietkopfes dient dazu, den Stift beim Festziehen der Schraube oder beim Vernieten in den Stehfalz einzupressen.

Mit Vorzug ist das Spannelement verdrehsicher im Durchbruch angeordnet. Die vom Spannelement auf den Stift wirkenden Kräfte verlaufen ausschließlich in Längsrichtung des Stiftes und verlagern diesen in Richtung des Stehfalzes. Tangential- oder Querkräfte wirken auf den Stift nicht ein. Weist der Stift vorteilhafterweise einen kreisrunden Querschnitt auf, dann kann der zweite Durchbruch als Bohrung ausgeführt sein. Der Durchbruch kann allgemein so ausgeführt sein, dass der Stift verliersicher im Durchbruch gehalten wird. Es besteht also keine Gefahr, dass er in den Aufnahmespalt zwischen den Schenkeln vorsteht, und ein Aufsetzen der Klemmlasche auf den Stehfalz verhindert.

Bei einer Variante der Erfindung ist vorgesehen, dass das freie Ende des Stiftes gerundet ist oder eine Spitze aufweist, die in Richtung des anderen Schenkels zeigt. Der Stift kann nunmehr relativ einfach durch den Stehfalz hindurch gesteckt werden und hält die Klemmlasche selbst dann noch sicher, wenn die Klemmung vollständig versagt.

Weist der andere Schenkel einen zum zweiten Durchbruch fluchtenden dritten Durchbruch auf, dann kann der Stift sogar beide Schenkel durchgreifen. Auf diese Weise können hohe Scherkräfte aufgenommen und hohe Querkräfte abgestützt werden.

Dabei sind der zweite und der dritte Durchbruch gleich ausgestaltet und können in einem Arbeitsgang als Bohrung hergestellt werden. Vorteilhaft weist der Stift eine Länge auf, die der Breite der Klemmlasche entspricht. Auf diese Weise werden die beiden Schenkel mit Sicherheit durchgriffen und der Stift einerseits vom Kopf, andererseits von einem Gegenstück, z.B. einer Mutter oder einem Nietkopf gehalten.

Bei einem bevorzugten Ausführungsbeispiel ist vorgesehen, dass der Stift aus einem Material besteht, das eine größere Festigkeit besitzt, als das des Klemmteils. Ein vorzeitiges Versagen des Stiftes wird dadurch ausgeschlossen.

Als vorteilhaft wird angesehen, wenn das Klemmteil aus Aluminium und/oder der Stift und/oder das Spannelement aus Stahl, insbesondere aus Edelstahl besteht/bestehen. Diese Materialien erfüllen die Anforderungen an die Festigkeit und sind zudem witterungsbeständig und verhalten sich chemisch bzw. elektrochemisch neutral gegenüber Metalldächern.

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
- Figur 1: eine perspektivische Ansicht einer Klemmlasche mit einer Halterung;
- Figur 2: eine Stirnansicht der Klemmlasche; und
- Figur 3: die Ansicht gemäß Figur 2 mit geklemmtem Stehfalz.

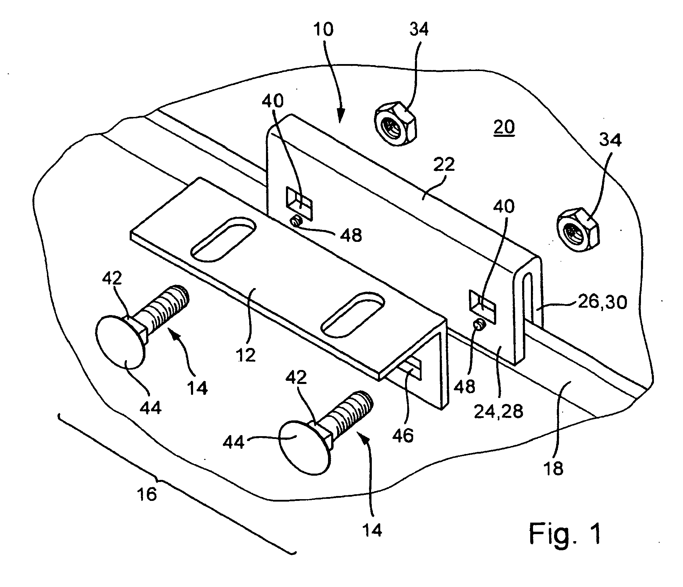

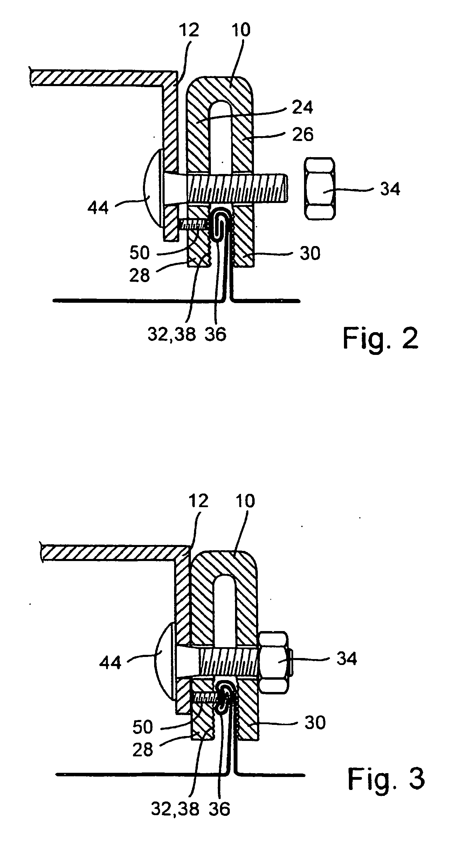

Die Figur 1 zeigt ein bevorzugtes Ausführungsbeispiel einer Klemmlasche 10 zum Befestigen von Schneefangsystemen oder ähnlichen Dachaufbauten auf Metalldächern. Die Klemmlasche 10 wird hierfür mit einem Haltewinkel 12 verbunden, der mittels zweier Schrauben 14 mit der Klemmlasche 10 verschraubt ist. Diese Schrauben 14 bilden ein Spannelement 16, mit dem die Klemmlasche 10 in bekannter Weise an einem Stehfalz 18 festgeklemmt wird. Die Klemmlasche 10 besteht aus einem U-förmig ausgebildeten Strangpressprofil 22, z.B. aus Kupfer, nichtrostendem Stahl oder einer AluminiumLegierung. Dessen Schenkel 24 und 26 verlaufen etwa parallel zueinander und sind als Klemmbacken 28 und 30 ausgebildet, was deutlich den Figuren 2 und 3 entnommen werden kann. Mit einem am äußeren Ende der Schenkel 24 und 26 gelegenen Klemmbereich 32 liegt das Strangpressprofil 22 beiderseits am Stehfalz 18 des Metalldaches 20 an, das z.B. aus Kupfer- oder nichtrostendem Stahl-Blech mit einer Dicke von beispielsweise 0,7 mm bestehen kann. Durch die beiden oberhalb des Stehfalzes 18 angeordneten Schrauben 14 und die aufgeschraubten Muttern 34 werden die Klemmbacken 28 und 30 gegen den Kopf 36 des Stehfalzes 18 gedrückt, so dass das Strangpressprofil 22 einen festen Halt auf dem Stehfalz 18 erhält. Um die Verbindung zwischen den Klemmbacken 28 und 30 und dem Stehfalz 18 noch zu verbessern, kann der Klemmbereich 32 mit einer in Längsrichtung des Stehfalzes 18 zeigenden Verzahnung 38 versehen sein.

Aus Figur 1 ist noch deutlich erkennbar, dass die beiden Schenkel 26 und 28 rechteckförmige, und insbesondere quadratische Durchbrüche 40 aufweist, welche die Schäfte und insbesondere einen rechteckförmigen Ansatz 42 am Schraubenkopf 44 der Schrauben 14 aufnehmen. Der Haltewinkel 12 ist mit entsprechenden Durchbrüchen 46 versehen.

Außerdem ist in Figur 1 erkennbar, dass unterhalb der Durchbrüche 40 für die Schrauben 14 zweite Durchbrüche 48 vorgesehen sind, die einen kreisrunden Querschnitt aufweisen. In diesen zweiten Durchbrüchen 48 sind, wie aus den Figuren 2 und 3 ersichtlich, Stifte 50 verschieblich gelagert. Diese Stifte 50 besitzen eine Länge die größer ist, als die Dicke des Klemmbereichs 32 der Klemmbacke 28 des Schenkels 24. Der Stift 50 steht also bei auf den Stehfalz 18 aufgesetzter Klemmlasche 10 über den Schenkel 24 vor und liegt am Stehfalz 18 an. Am vorstehenden Ende liegt der Haltewinkel 12 an. Dabei ist der Schraubenkopf 44 der Schraube 14 so groß, dass er das freie Ende des Stiftes 50 ebenfalls in radialer Richtung überragt. Dies bedeutet, dass bei weggelassenem Haltewinkel 12 der Schraubenkopf 44 am freien Ende des Stiftes 50 anliegen würde.

Werden durch Aufschrauben und Festziehen der Mutter 34 (siehe Figur 3) die Klemmbacken 28 und 30 an den Stehfalz 18 angepresst und dadurch die Klemmlasche 10 mit dem Stehfalz 18 verklemmt, dann wir der Stift 50 mittels des Haltewinkels 12 durch den zweiten Durchbruch 48 hindurch auf den Stehfalz 18 gedrückt. Der Stehfalz 18 wird dabei örtlich verformt und nimmt das freie Ende des Stiftes 50 in der Verformung auf. Aufgrund dieses Formschlusses wird sichergestellt, dass sich die Klemmlasche 10 nicht mehr in Längsrichtung des Stehfalzes 18 verschieben kann.

Selbst wenn kein Haltewinkel 12 verwendet wird, ist sichergestellt, dass der Stift 50 beim Festziehen der Mutter 34 eingepresst wird, da der Durchmesser des Schraubenkopfes 44 so groß ist, dass er den Stift 50 radial übergreift. Der Stift 50 wird dann vom Schraubenkopf 44 direkt eingepresst. Die Rechteckform des Durchbruches 46 verhindert ein Verdrehen des Schraubenkopfes 44 beim Festziehen der Mutter 34 und Verspannen der Klemmlasche 10. Auf den Stift 50 wirken also ausschließlich Kräfte in dessen Axialrichtung, die eine Verlagerung des Stiftes 50 auf den Stehfalz 18 bewirken.

## Patentansprüche

1. Klemmlasche (10), z.B. für ein Schneefangsystem oder eine Halterung für Dachaufbauten auf Metalldächern (20), mit zwei beiderseits durch wenigstens ein Spannelement (16) gegen einen Stehfalz (18) des Metalldaches (20) zu drückenden, als Klemmteil dienenden Klemmbacken (28, 30), wobei als Klemmteil ein einteiliges, U-förmig ausgebildetes Strangpressprofil (22) vorgesehen ist, dessen Schenkel (24, 26) als Klemmbacken (28, 30) ausgebildet sind, und die Schenkel (24, 26) zwei zueinander fluchtende Durchbrüche (40) aufweisen, wobei die Durchbrüche (40) vom Spannelement (16) durchgriffen sind und das Spannelement (16) einen den Durchbruch (40) randseitig übergreifenden Kopf (44) aufweist, **dadurch gekennzeichnet, dass** zwischen dem Durchbruch (40) und dem Rand des Kopfes (44) ein zweiter Durchbruch (48) vorgesehen ist, in welchen ein Stift (50) eingesetzt ist, dessen Länge größer ist, als die Dicke des den zweiten Durchbruch (48) aufweisenden Schenkels (24).

2. Klemmlasche nach Anspruch 1, **dadurch gekennzeichnet, dass** das Spannelement (16) eine Schraube (14) oder ein Niet ist.

3. Klemmlasche nach Anspruch 1 oder 2, **dadurch gekennzeichnet, dass** das Spannelement (16) verdrehsicher im Durchbruch (40) angeordnet ist.

4. Klemmlasche nach einem der vorhergehenden Ansprüche, **dadurch gekennzeichnet, dass** der Stift (50) einen kreisrunden Querschnitt aufweist.

5. Klemmlasche nach einem der vorhergehenden Ansprüche, **dadurch gekennzeichnet, dass** der Stift (50) ein freies Ende mit einem Linsenkopf, einem gerundeten Kopf oder einer Spitze aufweist, das in Richtung des anderen Schenkels (26) zeigt.

6. Klemmlasche nach einem der vorhergehenden Ansprüche, **dadurch gekennzeichnet, dass** der andere Schenkel (26) einen zum zweiten Durchbruch (48) fluchtenden dritten Durchbruch aufweist, wobei insbesondere der zweite und der dritte Durchbruch gleiche Dimensionen aufweisen.

7. Klemmlasche nach einem der vorhergehenden Ansprüche, **dadurch gekennzeichnet, dass** der Stift (50) eine Länge aufweist, die der Breite der Klemmlasche (10) entspricht.

8. Klemmlasche nach einem der vorhergehenden Ansprüche, **dadurch gekennzeichnet, dass** der Stift (50) aus einem Material besteht, das eine größere Festigkeit besitzt, als das des Klemmteils.

9. Klemmlasche nach einem der vorhergehenden Ansprüche, **dadurch gekennzeichnet, dass** das Klemmteil aus Aluminium und/oder der Stift (50) und/oder das Spannelement (16) aus Stahl, insbesondere aus Edelstahl, besteht/bestehen.

## Claims

1. A clamping strap (10), for instance for a snow guard system or for a mounting for structures installed on metal roofs (20), having two clamping jaws (28, 30) that serve as a clamping part and that are to be pressed on both sides by at least one clamping element (16) against a standing seam (18) of the metal roof (20), in which as the clamping part a one-piece, U-shaped extruded profile section (22) is provided, whose legs (24, 26) are embodied as clamping jaws (28, 30), and the legs (24, 26) have two apertures (40) aligned with one another, and the apertures (40) are engaged by the clamping element (16), and the clamping element (16) has a head (44) fitting peripherally over the aperture (40), **characterized in that** between the aperture (40) and the periphery of the head (44) a second aperture (48) is provided, into which a pin (50) is inserted, the length of which pin is greater than the thickness of the leg (24) having the second aperture (48).

2. The clamping strap according to claim 1, **characterized in that** the clamping element (16) is a screw (14) or a rivet.

3. The clamping strap according to claim 1 or 2, **characterized in that** the clamping element (16) is disposed in the aperture (40) in a manner fixed against relative rotation.

4. The clamping strap according to one of the foregoing claims, **characterized in that** the pin (50) has a circular cross section.

5. The clamping strap according to one of the foregoing claims, **characterized in that** the pin (50) has a free end with a lenticular head, a rounded head, or a point, and the free end points in the direction of the other leg (26).

6. The clamping strap according to one of the foregoing claims, **characterized in that** the other leg (26) has a third aperture, aligned with the second aperture (48), and the second and third apertures in particular have the same dimensions.

7. The clamping strap according to one of the foregoing claims, **characterized in that** the pin (50) has a length that is equivalent to the width of the clamping strap (10).

8. The clamping strap according to one of the foregoing claims, **characterized in that** the pin (50) comprises a material which has a greater strength than that of the clamping part.

9. The clamping strap according to claim, **characterized in that** the clamping part comprises aluminum, and/or the pin (50) and/or the clamping element (16) comprises steel, in particular special steel.

## Revendications

1. Attache de serrage (10), par exemple pour un système de retenue de neige ou un support pour des superstructures de toit sur des toitures métalliques (20), avec deux mors de serrage (28, 30) servant de pièce de serrage et destinés à être pressés par au moins un élément de serrage (16) contre un joint relevé (18) de la toiture métallique (20), sachant qu'il est prévu comme pièce de serrage un profilé filé (22) en forme de U d'un seul tenant dont les branches (24, 26) sont conçues comme mors de serrage (28, 30), et que les branches (24, 26) présentent deux trous débouchants (40) mutuellement alignés, sachant que les trous débouchants (40) sont traversés par l'élément de serrage (16) et que l'élément de serrage (16) présente une tête (44) dont le bord recouvre le trou débouchant (40), **caractérisée en ce qu'**est prévu, entre le trou débouchant (40) et le bord de la tête (44), un deuxième trou débouchant (48) dans lequel est insérée une broche (50) dont la longueur est supérieure à l'épaisseur de la branche (24) présentant le deuxième trou débouchant (48).

2. Attache de serrage selon la revendication 1, **caractérisée en ce que** l'élément de serrage (16) est un boulon (14) ou un rivet.

3. Attache de serrage selon la revendication 1 ou 2, **caractérisée en ce que** l'élément de serrage (16) est disposé dans le trou débouchant (40) en étant bloqué en rotation.

4. Attache de serrage selon l'une des revendications précédentes, **caractérisée en ce que** la broche (50) présente une section circulaire.

5. Attache de serrage selon l'une des revendications précédentes, **caractérisée en ce que** la broche (50) présente une extrémité libre, dotée d'une tête bombée, d'une tête arrondie ou d'une pointe, qui est dirigée en direction de l'autre branche (26).

6. Attache de serrage selon l'une des revendications précédentes, **caractérisée en ce que** l'autre branche (26) présente un troisième trou débouchant aligné avec le deuxième trou débouchant (48), le deuxième et le troisième trous débouchants présentant notamment des dimensions identiques.

7. Attache de serrage selon l'une des revendications précédentes, **caractérisée en ce que** la broche (50) présente une longueur qui correspond à la largeur de l'attache de serrage (10).

8. Attache de serrage selon l'une des revendications précédentes, **caractérisée en ce que** la broche (50) est constituée d'un matériau qui possède une plus grande résistance que celui de la pièce de serrage.

9. Attache de serrage selon l'une des revendications précédentes, **caractérisée en ce que** la pièce de serrage est réalisée en aluminium et/ou la broche (50) et/ou l'élément de serrage (16) en acier, en particulier en acier spécial.
